# EUROPÄISCHE PATENTANMELDUNG

(11) **EP 1 515 071 A2**
(43) Veröffentlichungstag der Anmeldung: **16.03.2005**
(21) Anmeldenummer: 04018422.8
(22) Anmeldetag: 04.08.2004
(51) Int. Cl.: F16K 1/30, F17C 13/04

(54) **Absperrventil für einen ortsbeweglichen Druckgasbehälter, insbesondere für eine Pressluftflasche für den Taucheinsatz**

(30) Priorität: 10.09.2003 DE 10342103
(71) Anmelder: Seemann Sub GmbH & Co. KG, 90530 Wendelstein (DE)
(72) Erfinder: Huber, Robert L., 81379 München (DE); Stoss, Robert, 90592 Schwarzenbrück (DE)
(74) Vertreter: Neubauer, Hans-Jürgen, Dipl.-Phys.

(57) **Zusammenfassung**

Die Erfindung betrifft ein Absperrventil (1; 1'; 1") für einen ortsbeweglichen Druckgasbehälter (35), insbesondere für eine Pressluftflasche für den Taucheinsatz. Ein Ventilkörper (2) weist wenigstens drei Anschlussstutzen (7, 17, 18) auf, nämlich einen zentralen Anschlussstutzen als Gasbehälter-Anschlussstutzen (7), einen weiteren Anschlussstutzen als Auslass-Anschlussstutzen (17) und einen dritten Anschlussstutzen als Spindeltrieb-Aufnahmestutzen (18). Erfindungsgemäß ist der Ventilkörper (2) mehrteilig ausgebildet bestehend aus einem Ventilkörperteil (3) mit dem Auslass-Anschlussstutzen (17) und dem Spindeltrieb-Aufnahmestutzen (18) und einer zentralen Mittelbolzen-Aufnahmebohrung (19) und einer radialen Ventilsitzteil-Aufnahmebohrung (20) zum Boden des Spindeltrieb-Aufnahmestutzens (18). Zudem besteht der Ventilkörper (2) aus einem länglichen Ventilsitzteil (5) mit einer Gaszuführungsbohrung (29) an dem an einem Ende der Ventilsitz (30) und am anderen Ende ein Abstützbund (26) angebracht sind. Das Ventilsitzteil (5) ist im montierten Zustand in die radiale Ventilsitzteil-Aufnahmebohrung (20) dicht eingesteckt. Des weiteren umfasst der Ventilkörper (2) einen Mittelbolzen (4), der dicht in die zentrale Mittelbolzen-Aufnahmebohrung (19) eingesteckt ist. Durch entsprechend angeordnete Gaszuführungsbohrungen (9, 11, 29) kann Gas vom angeschlossenen Druckgasbehälter (35) über den Spindeltrieb-Aufnahmestutzen (18) zum Auslass-Anschlussstutzen (17) strömen.

## Beschreibung

Die Erfindung betrifft ein Absperrventil für einen ortsbeweglichen Druckgasbehälter, insbesondere für eine Pressluftflasche für den Taucheinsatz nach dem Oberbegriff des Anspruchs 1.

Ein solches allgemein bekanntes Absperrventil für eine Pressluftflasche für den Taucheinsatz besteht in einer Ausführung als Einfach-Anschlussventil aus einem Ventilkörper mit drei Anschlussstutzen. Dabei weist ein zentraler Anschlussstutzen als Gasbehälter-Anschlussstutzen ein Behälteranschlussgewinde, in der Regel ein Außengewinde auf. Die zwei weiteren axial dazu versetzten Anschlussstutzen sind als Auslass-Anschlussstutzen und als Spindeltrieb-Aufnahmestutzen ausgebildet und liegen axial versetzt und in einer Querebene radial zur Achse des Gasbehälter-Anschlussstutzen. Eine Zentral-Gaszuführungsbohrung ist ausgehend vom Gasbehälter-Anschlussstutzen in den Querebenenbereich und anschließend eine Radial-Gaszuführungsbohrung zum Bodenbereich des Spindeltrieb-Aufnahmestutzens angebracht, wo im Bodenbereich ein Ventilsitz mit einem diesen umgebenden Ventilsitz-Gasraum ausgebildet ist. Dies ist die Gaszuführung vom Druckgasbehälter zum Ventilsitz.

Im Spindeltrieb-Aufnahmestutzen ist dicht aufgenommen und durch Verschrauben gehalten ein handbetätigbarer Spindeltrieb mit einer gegen den Ventilsitz verstellbaren Sitzdichtung. In einer bekannten Ausführung weist der Spindeltrieb ein Verschraubungsteil mit einer verdrehbaren Oberspindel und einer damit gekoppelten gegen den Ventilsitz verstellbaren Unterspindel mit Sitzdichtung auf. Vom Ventilsitzgasraum führt eine Auslass-Gasführungsleitung zum Bodenbereich des Auslass-Anschlussstutzens.

Insbesondere ist ein solches Absperrventil für eine Pressluftflasche für den Taucheinsatz konzipiert, wobei am Auslass-Anschlussstutzen ein Lungenautomat angeschlossen wird.

Weiter ist ein im Aufbau entsprechendes Doppelanschlussventil allgemein bekannt, welches zwei unabhängig voneinander absperrbare und öffenbare Ventileinheiten in einem Ventilkörper aufweist. Dazu sind zwei Auslass-Anschlussstutzen und zwei Spindeltrieb-Aufnahmestutzen mit zugeordneten Ventilsitzen und Spindeltrieben vorgesehen, welche über einen Gasbehälter-Anschlussstutzen versorgt werden. Je ein Auslass-Anschlussstutzen und ein zugeordneter Spindeltrieb-Aufnahmestutzen sind in einer bekannten Ausführung um 90° versetzt angeordnet, so dass sich eine kreuzförmige Stutzenanordnung ergibt. Dabei ist es bekannt, die Auslass-Anschlussstutzen gegenüberliegend in einer sogenannten Parallel-Ventilanordnung oder um 90° versetzt in einer Eckventilanordnung anzubringen. Das Doppelanschlussventil hat bei der Verwendung als Absperrventil an Pressluftflaschen für den Taucheinsatz die Funktion, dass zwei unabhängig voneinander aktivierbare Lungenautomaten angeschlossen und insbesondere zu Sicherheitszwecken unabhängig voneinander im Wechsel bei Störungen verwendbar sind. Bei Absperrventilen für einen beweglichen Druckgasbehälter, insbesondere bei Pressluftflaschen für den Taucheinsatz sind unterschiedliche Behälter mit unterschiedlichen Anschlussgewinden auf dem Markt. Insbesondere werden unterschiedliche Gewindegrößen sowie metrische oder Zollgewinde verwendet. Ebenso sind solche unterschiedlichen Anschlussgewinde für den Anschluss von Lungenautomaten auf dem Markt üblich, wobei je nach Einsatzfall bei Doppelanschlussventilen Eckventile oder Parallelventile eingesetzt werden, um hier alle mögliche Variationen von Anschlussgewinden und geometrischen Anordnungen abzudecken sind ersichtlich eine Vielzahl unterschiedlicher Ausführungsformen von Absperrventilen erforderlich. Dies bedingt einerseits einen großen Herstellungsaufwand und andererseits eine umfangreiche Lagerhaltung unterschiedlicher Ausführungsformen in Verbindung mit einer aufwendigen Logistik. Zudem ist die Herstellung und Bearbeitung der Ventilsitze im Bodenbereich der Spindeltrieb-Aufnahmestutzen fertigungstechnisch aufwendig. Bei Dichtigkeitsproblemen durch Fehler am Ventilsitz, insbesondere aufgrund von Verschleißerscheinungen muss zumindest der gesamte Ventilkörper des Absperrventils ausgetauscht werden.

Aufgabe der Erfindung ist es, einen einfachen und kostengünstigen Aufbau eines Absperrventils vorzuschlagen, der an unterschiedliche Gegebenheiten, insbesondere an unterschiedliche Anschlussgewinde einfach anpassbar ist. Zudem sollen Dichtheitsprobleme am Ventilsitz einfach und kostengünstig reparierbar sein.

Diese Aufgabe wird mit den Merkmalen des Anspruchs 1 gelöst.

Gemäß Anspruch 1 ist der Ventilkörper mehrteilig ausgebildet und besteht bei einem Einfach-Anschlussventil aus einem Ventilköperteil mit dem Auslass-Anschlussstutzen und dem Spindeltrieb-Aufnahmestutzen mit einer zentralen Mittelbolzen-Aufnahmebohrung und einer radialen Ventilsitzteil-Aufnahmebohrung in Richtung zum Boden des Spindeltrieb-Aufnahmestutzens.

Weiter umfasst das Absperrventil ein längliches Ventilsitzteil mit einer Gaszuführungsbohrung zum Ventilsitz, an dem an einem Ende der Ventilsitz und am anderen Ende ein Abstützbund angebracht sind. Das Ventilsitzteil wird durch die Mittelbolzen-Aufnahmebohrung in die radiale Ventilsitzteil-Aufnahmebohrung dicht eingesteckt und über den Abstützbund in Richtung nach radial außen vorzugsweise bündig mit der Mittelbolzen-Aufnahmebohrungswand abgestützt und festgelegt.

Weiter besteht der mehrteilige Ventilkörper aus einem Mittelbolzen, der dicht in die zentrale Mittelbolzen-Aufnahmebohrung eingesteckt ist. Der Mittelbolzen enthält die Zentral-Gaszuführungsbohrung und an einem Ende ist der vom Ventilkörperteil abstehende Gasbehälter-Anschlussstutzen mit dem Behälteranschlussgewinde ausgebildet, mit einem daran anschließenden Mittelbolzenbund. Dieser dient einerseits zur Abstützung des Mittelbolzens am Ventilkörperteil und andererseits zur Abstützung am Gasbehälteranschlussrand.

Am anderen Ende des Mittelbolzens ist eine Spannverschraubung zur axialen Halterung des Mittelbolzens in der Mittelbolzen-Aufnahmebohrung des Ventilkörperteils angebracht. Zudem ist im Mittelbolzen ein Teil der Radial-Gaszuführungsbohrung zum Ventilsitzteil hin angebracht, wobei der andere Teil der Radial-Gaszuführungsbohrung im Ventilsitzteil hin zum Ventilsitz angebracht ist.

Vorteilhaft können Mittelbolzen mit unterschiedlichen Gasbehälter-Anschlussgewinden hergestellt und auf Lager gehalten werden. Ebenso können Ventilkörperteile mit unterschiedlichen Auslassanschlussgewinden und gegebenenfalls unterschiedlichen Spindeltrieb-Aufnahmegewinden hergestellt und auf Lager gehalten werden. Je nach den Gegebenheiten und gewünschten Einsatzfällen können einfach unterschiedliche Kombinationen von Ventilkörperteilen und Mittelbolzen kombiniert werden, so dass mit einer reduzierten Teilevielfalt unterschiedliche Absperrventilvarianten montierbar sind. Dies führt vorteilhaft zu reduzierten Herstellungskosten und reduzierten Lagerhaltungskosten.

Ein weiterer Vorteil besteht darin, dass auch die Ventilsitzkörperteile als Einzelteile montierbar und durch den eingesetzten Mittelbolzen fixiert sind.

Vorteilhaft kann dadurch bei einer Abnützung an einem Ventilsitz das Ventilsitzteil ausgewechselt werden, ohne dass wie bisher der komplette Ventilkörper aufwendig gewechselt werden muss. Bei anderen Anforderungen an die Abdichtung und an den Gasdurchfluss kann zudem ein Absperrventil durch ein anders dimensioniertes Ventilsitzteil einfach an den Bedarf angepasst werden ohne das eine insgesamt neue Ventilkörperversion erstellt werden muss.

In einer besonders bevorzugten Weiterbildung nach Anspruch 2 ist das Absperrventil als Doppelanschlussventil ausgebildet mit zwei Auslass-Anschlussstutzen und zwei jeweils zugeordneten Spindeltrieb-Aufnahmestutzen mit je einem Ventilsitzteil und einem einzigen zentralen Mittelbolzen. Auch hier ist ersichtlich durch eine Kombination und Montage unterschiedlich ausgebildeter Ventilkörperteile, zentraler Mittelbolzen und Ventilsitzteile mit geringer Teilevielfalt eine große Anzahl von Absperrventilvarianten je nach Bedarf und Kundenwunsch herstellbar.

Bei einer konstruktiv günstig herstellbaren Ausführungsform eines Doppelanschlussventils nach Anspruch 3 führt durch den Mittelbolzen ausgehend von der Zentral-Gaszuführungsbohrung wenigstens eine Radial-Gaszuführungsbohrung in eine daran umlaufende Gaszuführungsnut, wodurch bei montiertem Mittelbolzen ein Gasringraum gebildet wird, an den sich die Gaszuführungsbohrungen der zwei gegeneinander versetzten Ventilsitzteile anschließen.

Gemäß Anspruch 4 wird bevorzugt auch beim erfindungsgemäßen Doppelanschlussventil eine kreuzförmige Stutzenanordnung vorgesehen, wobei die Auslass-Anschlussstutzen und die zugeordneten Spindeltriebaufnahmestutzen um 90° versetzt angeordnet sind. Diese kreuzförmige Stutzenanordnung ist sowohl bei einer Eckventilanordnung, bei der die beiden Auslass-Anschlussstutzen um 90° versetzt liegen als auch bei einer Parallel-Ventilanordnung, bei der die beiden Auslass-Anschlussstutzen axial gegenüberliegen, bevorzugt einsetzbar.

Eine besonders vorteilhafte Montage von Absperrventilvarianten ergibt sich mit den Merkmalen des Anspruchs 5. Dort wird vorgeschlagen, dass im Ventilkörperteil zwischen der Mittelbolzen-Aufnahmebohrung und wenigstens drei Anschlussstutzenböden entsprechend drei Ventilsitzteil-Aufnahmebohrungen angebracht sind, in die jeweils zur Ausbildung eines Auslass-Anschlussstutzens ein Blindstopfen und zur Ausbildung eines zugeordneten Spindeltrieb-Aufnahmestutzens ein Ventilsitzteil dicht einsteckbar sind. Wenn nur drei Ventilsitzteil-Aufnahmebohrungen vorgesehen sind, ist der Anschlussstutzen ohne Ventilsitzteil-Aufnahmebohrung immer ein Auslass-Anschlussstutzen, dem immer ein Spindeltrieb-Aufnahmestutzen mit einem Ventilsitzteil zugeordnet ist. Die beiden anderen Anschlussstutzen können dann je nach dem wo der Blindstopfen und das Ventilsitzteil angebracht werden, wechselweise als Auslass-Anschlussstutzen oder Spindeltrieb-Aufnahmestutzen ausgebildet werden. Dadurch ist mit einfachen Maßnahmen entweder eine Parallel-Ventilanordnung oder eine Eckventilanordnung herstellbar. Wenn für alle vier Anschlussstutzenböden je eine Ventilsitzteil-Aufnahmebohrung angebracht ist, wird ein zweiter Blindstopfen erforderlich, der entsprechend zugeordnet mit einem Ventilsitzteil kombinierbar ist. Durch die unterschiedliche Anordnung der beiden Blindstopfen und der beiden Ventilsitzteile kann wechselweise eine Parallel-Ventilanordnung oder Eckventilanordnung hergestellt werden.

Zweckmäßig werden an den Auslass-Anschlussstutzen und Spindeltrieb-Aufnahmestutzen nach Anspruch 6 möglichst gleiche Innengewinde und am Gasbehälter-Anschlussstutzen bevorzugt ein Außengewinde angebracht.

In einer Weiterbildung nach Anspruch 7 wird als Verdrehsicherung ein Stift zwischen dem Ventilkörperteil und dem Mittelbolzenbund eingesetzt, wodurch hohe Einschraubdrehmomente über die Anschlussstutzen zum Einschrauben des Absperrventils in den Druckgasbehälter aufbringbar sind.

Weiter wird mit den Merkmalen des Anspruchs 8 eine Verdrehsicherung des Ventilsitzteils und gegebenenfalls eines Blindstopfens über einen Abstützbund und eine Nut in der Wand der Mittelbolzen-Aufnahmebohrung erreicht. Dies ist wesentlich für eine verdrehsichere Halterung des Ventilsitzteiles.

Die Spannverschraubung für den Mittelbolzen wird nach Anspruch 9 zweckmäßig durch eine die Mittelbolzen-Aufnahmebohrung überdeckende Haltescheibe und eine zentrale, die Haltescheibe mit der Stirnseite des Mittelbolzens verbindende Schraube gebildet. Dies ist eine konstruktiv einfache Lösung. Es sind jedoch auch andere allgemein bekannte Halterungen für Bolzen in Aufnahmebohrungen einsetzbar.

Gemäß Anspruch 10 ist die jeweilige Auslass-Gasführungsleitung von einem Ventilsitz-Gasraum zum Bodenbereich eines zugeordneten Auslass-Anschlussstutzens als gerade, direkte Auslass-Gasführungsbohrung im Ventilkörperteil geführt. Dies ist eine einfach herstellbare Ausführungsform.

Bei einer dazu alternativen Ausführungsform nach Anspruch 11, die insbesondere bei Platzproblemen für eine gerade direkte Auslassgasführungsbohrung einsetzbar ist, verläuft die Auslass-Gasführungsleitung vom Ventilsitz-Gasraum in eine umlaufende Gasauslassführungsnut des montierten Mittelbolzens. Von dort verläuft die Gasführung am Umfang der Gasauslassführungsnut versetzt zum Bodenbereich des zugeordneten Auslassstutzens. Im Falle eines Doppelanschlussventils sind dabei entsprechend zwei axial gegeneinander versetzte Gasauslassführungsnuten vorgesehen.

Der Spindeltrieb besteht nach Anspruch 12 aus einem in den Spindeltrieb-Aufnahmestutzen einschraubbaren Verschraubungsteil mit einer verdrehbaren, aus dem Verschraubungsteil herausragenden Oberspindel und einer damit gekoppelten gegen den Ventilsitz verstellbaren Unterspindel mit der Sitzdichtung. Dies ist eine funktionssichere, einfach herstellbare und einfach montierbare Ausführungsform eines Spindeltriebs.

Anhand einer Zeichnung werden Ausführungsbeispiele der Erfindung näher erläutert.

Es zeigen:
- Fig. 1: eine schematische Schnittdarstellung durch ein Absperrventil in einer ersten Ausführungsform mit einer Parallel-Ventilanordnung,
- Fig. 2: eine schematische Schnittdarstellung des Absperrventils von Fig. 1 mit einer Eckventilanordnung,
- Fig. 3: eine schematische Schnittdarstellung durch die Schnittebene A - A von Fig. 4 eines Absperrventils in einer zweiten Ausführungsform,
- Fig. 4: eine schematische Schnittdarstellung durch die Schnittebene B - B von Fig. 3 des Absperrventils von Fig. 3,
- Fig. 5: eine schematische Schnittdarstellung eines Längsschnittes durch einen Mittelbolzen,
- Fig. 6: eine schematische Schnittdarstellung entlang der Schnittebene C - C von Fig. 5 des Mittelbolzens,
- Fig. 7: eine schematische Schnittdarstellung durch die Schnittebene D - D von Fig. 8 eines Ventilkörperteils,
- Fig. 8: eine schematische Schnittdarstellung entlang der Schnittebene E - E von Fig. 7 des Ventilkörperteils,
- Fig. 9: eine schematische Schnittdarstellung eines Längsschnittes durch ein Ventilsitzteil,
- Fig. 10: eine schematische Draufsichtung mit Blickrichtung F von Fig. 9 des Ventilsitzteils,
- Fig. 11: eine schematische Seitenansicht eines Blindstopfens,
- Fig. 12: eine schematische Draufsicht mit Blickrichtung G von Fig. 11 des Blindstopfens,
- Fig. 13: eine schematische Schnittdarstellung durch ein Absperrventil in einer dritten Ausführungsform, und
- Fig. 14: eine schematische Schnittdarstellung durch das Absperrventil von Fig. 13, wobei die Schnittebene um 90° um die Längsachse gedreht ist.

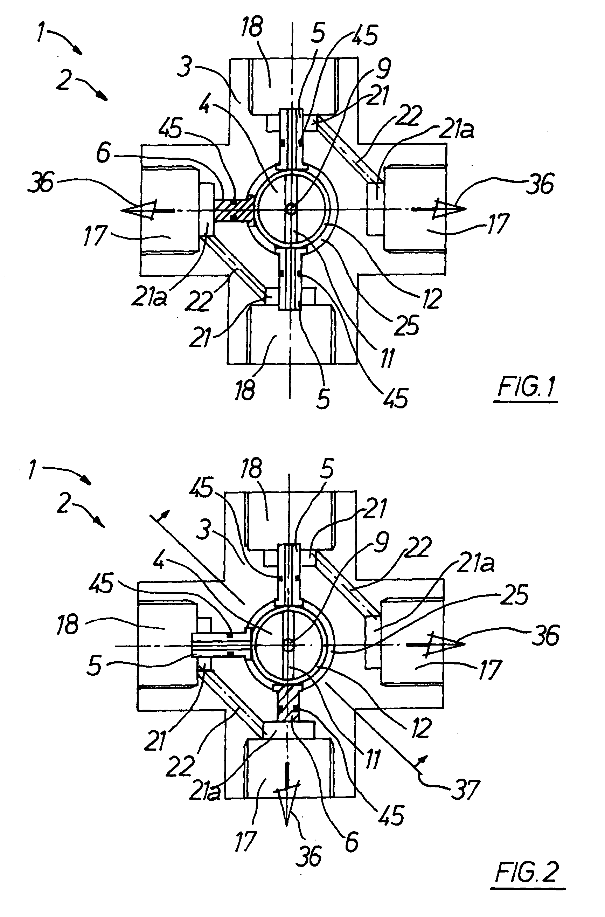

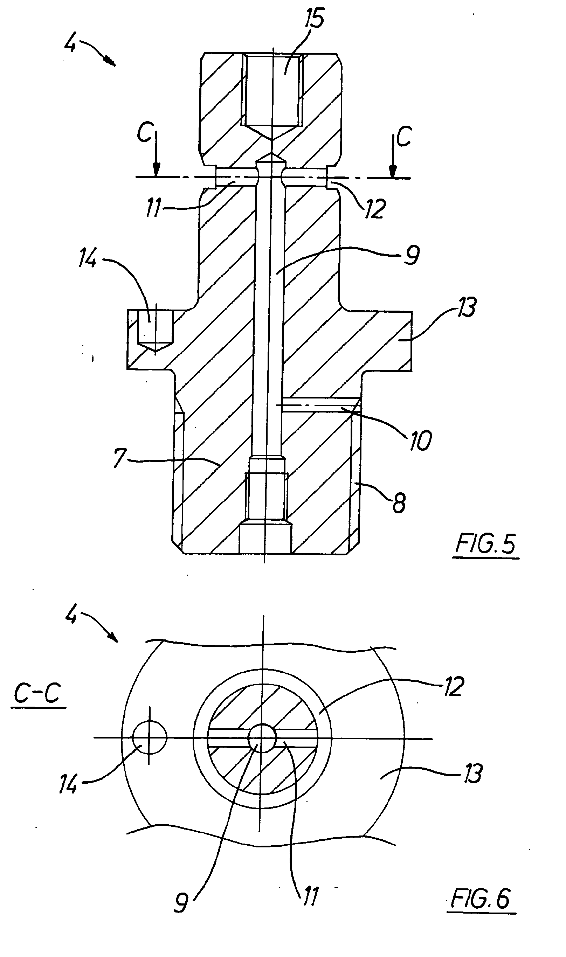

In Fig. 1 ist eine schematische Schnittdarstellung durch ein Absperrventil 1 in einer ersten Ausführungsform gezeigt. Das Absperrventil 1 weist einen Ventilkörper 2 auf, der mehrteilig ausgebildet ist. Der Ventilkörper 2 besteht aus einem Ventilkörperteil 3, einem Mittelbolzen 4, zwei länglichen Ventilsitzteilen 5 und einem Blindstopfen 6. Diese Einzelteile des Ventilkörpers 2 sind in den Fig. 5 bis 12 in Einzelteildarstellungen gezeigt, wobei diese für ein besseres Gesamtverständnis im nachfolgenden beschrieben werden.

In Fig. 5 ist ein schematischer Längsschnitt durch den Mittelbolzen 4 dargestellt. Ausgehend von einem Gasbehälter-Anschlussstutzen 7, der ein Behälteranschlussgewinde 8 aufweist, ist eine axial ausgerichtete Zentral-Gaszuführungsbohrung 9 im Mittelbolzen 4 ausgebildet. Das Behälteranschlussgewinde 8 ist als Außengewinde ausgeführt, wobei im Endbereich des Behälteranschlussgewindes 8 eine radial ausgerichtete Sicherheitsbohrung 10, die eine Verbindung zwischen der Zentral-Gaszuführungsbohrung 9 und der Außenseite des Mittelbolzens 4 herstellt, angeordnet ist. Die Zentral-Gaszuführungsbohrung 9 endet in einem Querebenenbereich, in dem im montierten Zustand das Ventilkörperteil 3 angeordnet ist. In dieser Querebene ist eine Radial-Gaszuführungsbohrung 11 durch den Mittelbolzen 4 ausgeführt, die in eine am Mittelbolzen 4 umlaufende Gaszuführungsnut 12 führt. In Axialrichtung gesehen zwischen der Radial-Gaszuführungsbohrung 11 und dem Gasbehälter-Anschlussstutzen 7 ist ein Mittelbolzenbund 13 ausgebildet, in dem eine Stiftbohrung 14 angebracht ist. Am dem Gasbehälter-Anschlussstutzen 7 axial gegenüberliegenden Ende des Mittelbolzens 4 ist ein Sackloch 15 mit Innengewinde vorgesehen, in das eine Schraube 16 unter Ausbildung einer Spannverschraubung für eine axiale Halterung des Mittelbolzens 4 am Ventilkörperteil 3 eingeschraubt werden kann.

In Fig. 6 ist eine schematische Schnittdarstellung entlang der Schnittebene C - C von Fig. 5 dargestellt. Die Zentral-Gaszuführungsbohrung 9 verläuft in dieser Darstellung senkrecht zur Zeichenebene. Zudem ist zu erkennen, dass die Radial-Gaszuführungsbohrung 11 in der um den Mittelbolzen 4 umlaufenden Gaszuführungsnut 12 endet und somit eine Strömungsverbindung zwischen der Zentral-Gaszuführungsbohrung 9 und der Gaszuführungsnut 12 herstellt.

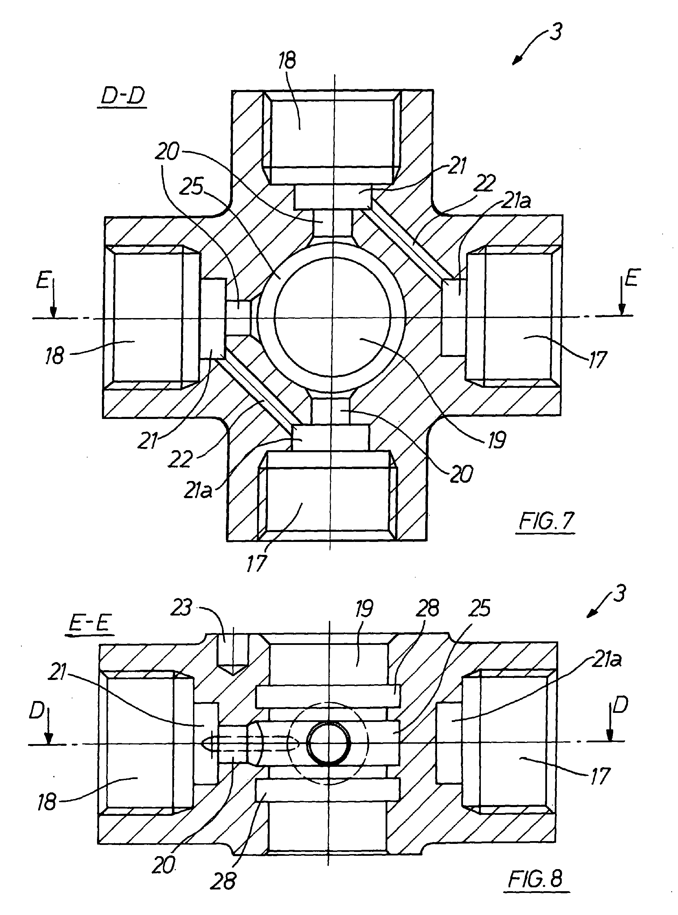

In Fig. 7 ist eine schematische Schnittdarstellung entlang der Schnittebene D - D von Fig. 8 des Ventilkörperteils 3 dargestellt. Am Ventilkörperteil 3 sind vier Anschlussstutzen kreuzförmig angeordnet. Die Anschlussstutzen können je nach Ausführung des Absperrventils 1 als Auslass-Anschlussstutzen 17 oder als Spindeltrieb-Aufnahmestutzen 18 ausgeführt sein. Die Auslass-Anschlussstutzen 17 bzw. die Spindeltrieb-Aufnahmestutzen 18 sind bei der kreuzförmigen Stutzenanordnung jeweils um 90° versetzt angeordnet. Zentral im Ventilkörperteil 3 ist eine Mittelbolzen-Aufnahmebohrung 19 vorgesehen. Von dieser sind bei drei Anschlussstutzen Ventilsitzteil-Aufnahmebohrungen 20 radial zu den Anschlussstutzen gehend angebracht. In Abhängigkeit von der gewünschten Ausführungsform des Absperrventils 1 kann in die Ventilsitzteil-Aufnahmebohrung 20 von der Mittelbolzen-Aufnahmebohrung 19 aus entweder ein Ventilsitzteil 5 für die Ausbildung eines Spindeltrieb-Aufnahmestutzens 18 oder ein Blindstopfen 6 für die Ausbildung eines Auslass-Anschlussstutzens 17 dicht eingeschoben werden. Bei der in Fig. 7 dargestellten Ausführungsform des Ventilkörperteils 3 ist ein Anschlussstutzen ohne Ventilsitzteil-Aufnahmebohrung 20 ausgeführt, so dass dieser immer als Auslass-Anschlussstutzen 17 genutzt wird. Bei den Spindeltrieb-Aufnahmestutzen 18 ist der Bodenbereich als Ventilsitz-Gasraum 21 ausgebildet, der über eine Auslass-Gasführungsleitung 22 mit dem Bodenbereich 21 a des zugeordneten Auslass-Anschlussstutzens 17 strömungsmäßig verbunden ist. Der dem Auslass-Anschlussstutzen 17 ohne Ventilsitzteil-Aufnahmebohrung 20 zugeordnete Aufnahmestutzen wird entsprechend immer als Spindeltrieb-Aufnahmestutzen 18 genutzt, wobei die beiden übrigen Aufnahmestutzen in Abhängigkeit von der gewünschten Ausführungsform des Absperrventils wechselweise als Spindeltrieb-Aufnahmestutzen 18 oder als Auslass-Anschlussstutzen 17 genutzt werden können.

In Fig. 8 ist eine schematische Schnittdarstellung des Ventilkörperteils 3 entlang der Schnittebene E - E von Fig. 7 gezeigt. An einer im montierten Zustand dem Mittelbolzen 4 zugeordneten Außenseite des Ventilkörperteils 3 ist eine Stiftbohrung 23 angebracht, so dass bei der Montage des Mittelbolzens 4 am Ventilkörperteil 3 die Stiftbohrung 23 und die Stiftbohrung 14 am Mittelbolzenbund 13 fluchten. Somit kann ein Stift 24 in die Stiftbohrung 14 am Mittelbolzenbund 13 und in die Stiftbohrung 23 am Ventilkörperteil 3 eingesetzt werden für eine Verdrehsicherung zwischen dem Mittelbolzen 4 und dem Ventilkörperteil 3. In der Wand der Mittelbolzen-Aufnahmebohrung 13 ist in der Querebene der Ventilsitz-Aufnahmebohrungen 20 eine umlaufende Nut 25 ausgebildet, in der ein Abstützbund 26 des Ventilsitzteils 5 bzw. ein Abstützbund 27 des Blindstopfens 6, die dazu jeweils unrund ausgeführt sind als Verdrehsicherung für das Ventilsitzteil 5 bzw. den Blindstopfen 6 im montierten Zustand aufgenommen ist. In Axialrichtung gesehen ober- und unterhalb der Nut 25 sind weitere Nuten 28 umlaufend in der Mittelbolzen-Aufnahmebohrung 19 für die Aufnahme von Dichtelementen vorgesehen.

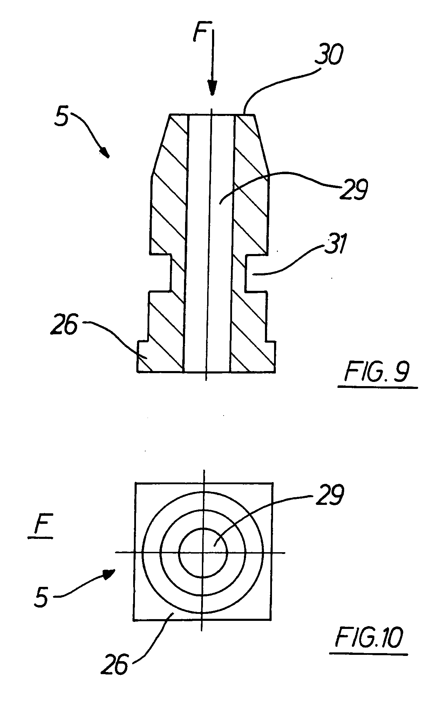

In Fig. 9 ist ein schematischer Längsschnitt durch das Ventilsitzteil 5 dargestellt. Das länglich ausgeführte Ventilsitzteil 5 weist eine Gaszuführungsbohrung 29 auf. An einem Ende ist ein Ventilsitz 30 und am anderen Ende der Abstützbund 26 angebracht. Dazwischenliegend ist eine umlaufende Nut 31 für die Aufnahme eines Dichtelements vorgesehen.

In Fig. 10 ist eine schematische Draufsicht auf das Ventilsitzteil 5 mit Blickrichtung F von Fig. 9 dargestellt. Dabei ist die quadratische Ausführung des Abstützbundes 26 zu erkennen, so dass das Ventilsitzteil 5 im montierten Zustand mit entsprechend in der Nut 25 aufgenommenen Abstützbund 26 verdrehsicher angeordnet ist.

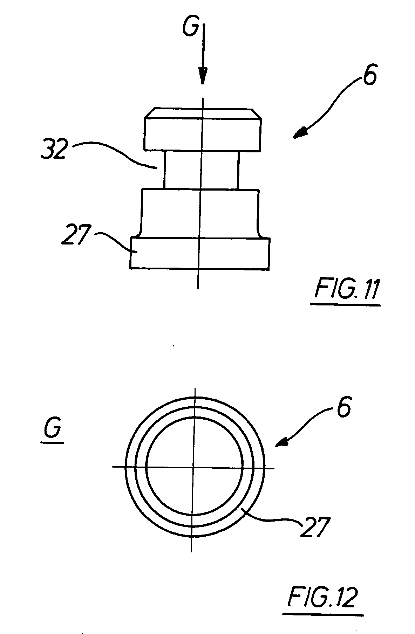

In Fig. 11 ist eine schematische Seitenansicht des Blindstopfens 6 dargestellt. An einem Ende des Blindstopfens 6 ist der Abstützbund 27 ausgebildet und beabstandet dazu ist umlaufend um den Blindstopfen 6 eine Nut 32 für die Aufnahme eines Dichtelements ausgebildet.

In Fig. 12 ist eine schematische Draufsicht mit Blickrichtung G von Fig. 11 des Blindstopfens 6 dargestellt. Der Abstützbund ist bei dieser Ausführung des Blindstopfens 6 rund ausgeführt, wobei auch hier, wie beim Ventilsitzteil 5 beschrieben ein unrunder Abstützbund 27 für eine Verdrehsicherung des Blindstopfens 6 vorgesehen sein kann.

Bei der in Fig. 1 dargestellten Ausführungsform des Absperrventils 1 ist das Ventilkörperteil 3 mit einer kreuzförmigen Stutzenanordnung ausgeführt, wobei ein Anschlussstutzen ohne Ventilsitzteil-Aufnahmebohrung ausgeführt ist. Am diesem Anschlussstutzen gegenüberliegenden Anschlussstutzen ist in die Ventilsitzteil-Aufnahmebohrung der Blindstopfen 6 eingesteckt und in die beiden übrigen, gegenüberliegenden Anschlussstutzen ist jeweils ein Ventilsitzteil 5 eingesteckt. Sowohl der Blindstopfen 6 als auch die Ventilsitzteile 5 werden von der Mittelbolzen-Aufnahmebohrung 19 ausgehend in die radiale Ventilsitzteil-Aufnahmebohrung 20 dicht eingesteckt und über den jeweiligen Abstützbund 26 oder 27 in Richtung nach radial außen abgestützt und festgelegt. Durch die unrunde Ausführung des Abstützbundes 26 des Ventilsitzteiles 5 ist dieser so in der Nut 25 aufgenommen, dass die Ventilsitzteile 5 verdrehsicher im Ventilkörperteil 3 angeordnet sind. Anschließend wird beim Zusammenbau des Ventilkörpers 2 der Mittelbolzen 4 in die Mittelbolzen-Aufnahmebohrung 19 dicht eingesetzt und mit der Spannverschraubung axial am Ventilkörperteil 3 gehalten (hier nicht mit dargestellt).

Die Anschlussstutzen mit Ventilsitzteil 5 sind somit als Spindeltrieb-Aufnahmestutzen 18 ausgeführt, in die ein Spindeltrieb 33 mit einer gegen den Ventilsitz 30 des Ventilsitzteiles 5 verstellbaren Sitzdichtung 34 eingeschraubt werden kann (hier nicht mit dargestellt). Der Anschlussstutzen, dem der Blindstopfen 6 zugeordnet ist, und der Anschlussstutzen ohne Ventilsitzteil-Aufnahmebohrung 20 sind somit als Auslass-Anschlussstutzen 17 ausgeführt, in die ein Lungenautomat-Anschluss eingeschraubt werden kann (hier nicht mit dargestellt).

Ist der Mittelbolzen 4, dessen Axialausrichtung in Fig. 1 senkrecht zur Zeichenebene verläuft, mittels dem Gasbehälter-Anschlussstutzen 7 an einem Druckgasbehälter 35 (hier nicht mit dargestellt), wie z. B. einer Pressluftflasche für den Taucheinsatz, angeschlossen, so kann das Gas aus dem Druckgasbehälter 35 durch die Zentral-Gaszuführungsbohrung 9 in den Mittelbolzen 4 bis zur Radial-Gaszuführungsbohrung 11 einströmen und durch diese in die Gaszuführungsnut 12. Die Ventilsitzteile 5 sind im montierten Zustand mit Ihrer Gaszuführungsbohrung 29 so an der Gaszuführungsnut 12 angeordnet, dass das Gas in die Ventilsitzteile entsprechend einströmen kann und bei geöffneten Spindeltrieb 33 weiter in den Ventilsitz-Gasraum 21 strömt. Vom Ventilsitz-Gasraum 21 kann das Gas weiter in den Bodenbereich 21 a des jeweils zugeordneten Auslass-Anschlussstutzens 17 durch die Auslass-Gasführungsleitung 22 strömen und somit zum am Auslass-Anschlussstutzen 17 angeschlossenen Lungenautomaten.

Aufgrund der Anordnung des Blindstopfens 6 in Fig. 1 gegenüberliegend zu dem Anschlussstopfen ohne Ventilsitzteil-Aufnahmebohrung 20 ist eine Parallel-Ventilanordnung ausgebildet, da die beiden Auslass-Anschlussstutzen 17 axial gegenüberliegend angeordnet sind. In Fig. 2 ist ebenfalls das Absperrventil 1 in einer schematischen Schnittdarstellung gezeigt, wobei hier im Unterschied zu der in Fig. 1 dargestellten Variante der Blindstopfen 6 benachbart zu dem Anschlussstutzen ohne Ventilsitzteil-Aufnahmebohrung 20 angeordnet ist. Somit ist hier eine Eckventilanordnung ausgebildet, da die beiden Auslass-Anschlussstutzen 17 benachbart über Eck angeordnet sind. Der jeweils mögliche Gasausstrom aus den Auslass-Anschlussstutzen 17 ist in Fig. 1 und 2 mit Pfeilen 36 eingezeichnet.

Gegenüber der in den Fig. 1 und 2 beschriebenen Ausführungsform des Absperrventils als Doppelanschlussventil kann in einer einfachen Ausführungsform auch ein Absperrventil als Einfach-Anschlussventil ausgebildet werden. Dafür sind am Ventilkörperteil 3 ein einziger Auslass-Anschlussstutzen 17 und ein einziger Spindeltrieb-Aufnahmestutzen 18 ausreichend, wobei auch hier die Gasversorgung vom Druckgasbehälter 35 durch die Zentral-Gaszuführungsbohrung 9 des Mittelbolzens 4 und die Radial-Gaszuführungsbohrung 11 in das Ventilsitzteil 5 und von dort weiter durch den Ventilsitz-Gasraum 21 und die Auslass-Gasführungsleitung 22 zum Auslass-Anschlussstutzen 17 erfolgt. Der im Spindeltrieb-Aufnahmestutzen 18 angeordnete Spindeltrieb 33 muss für eine Gasdurchströmung selbstverständlich geöffnet werden. Mit einer diagonal in die kreuzförmige Stutzenanordnung von Fig. 2 eingezeichneten Trennlinie 37 mit entsprechend angeordneten Pfeilen ist der Bauteilbereich des Absperrventils 1 gekennzeichnet, der für eine Ausführung als Einfach-Anschlussventil notwendig ist.

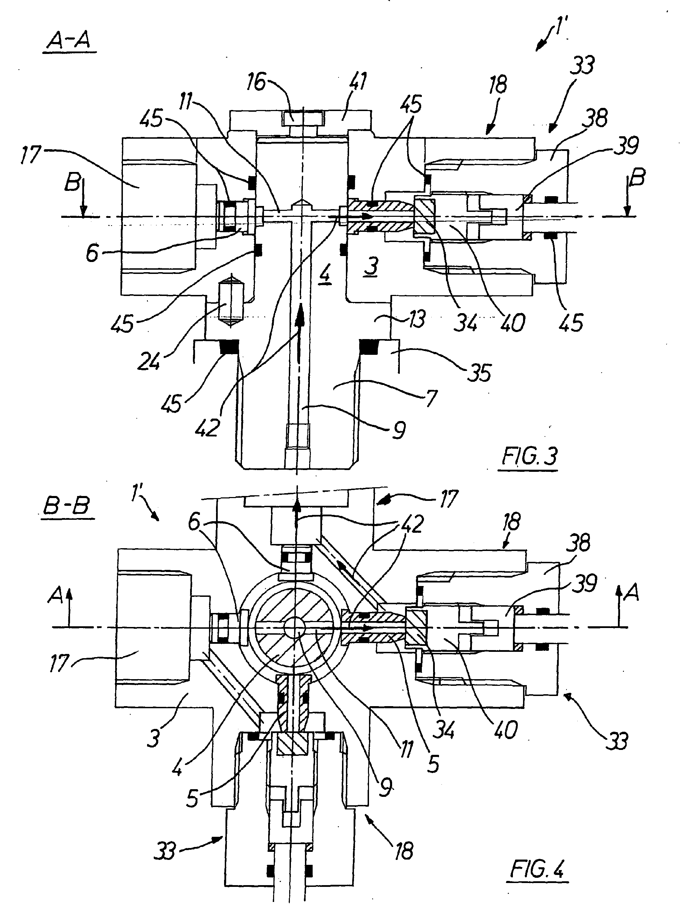

In Fig. 3 ist eine schematische Schnittdarstellung entlang der Schnittebene A-A von Fig. 4 eines Absperrventils 1' in einer zweiten Ausführungsform gezeigt. Bauteile mit gleicher Funktion wie beim Absperrventil 1 sind mit den gleichen Bezugszeichen versehen. Wie aus Fig. 4, in der eine schematische Schnittdarstellung entlang der Schnittebene B-B von Fig. 3 gezeigt ist, ist bei der Ausführungsform des Absperrventils 1' jedem Anschlussstutzen eine Ventilsitzteil-Aufnahmebohrung 20 zugeordnet. Bei der in Fig. 4 dargestellten Variante ist eine Eckventilanordnung ausgeführt, wobei in den Spindeltrieb-Aufnahmestutzen 18 jeweils ein Spindeltrieb 33 eingeschraubt ist. Entsprechend sind den Spindeltrieb-Aufnahmestutzen 18 Ventilsitzteile 5 und den Auslass-Anschlussstutzen 17 Blindstopfen 6 in den jeweiligen Ventilsitzteil-Aufnahmebohrungen 20 zugeordnet.

Der Spindeltrieb 33 besteht aus einem in den Spindeltrieb-Aufnahmestutzen 18 einschraubbaren Verschraubungsteil 38, aus dem eine verdrehbare Oberspindel 39 herausragt. Mit der Oberspindel 39 ist eine gegen den Ventilsitz 30 verstellbare Unterspindel 40 gekoppelt, wobei die Sitzdichtung 34 an der Unterspindel 40 angeordnet ist. Sowohl in Fig. 3 als auch in Fig. 4 ist der Spindeltrieb 33 in seiner geschlossenen Stellung dargestellt.

In Fig. 3 ist zu erkennen, dass die Stiftbohrung 14 am Mittelbolzenbund 13 und die Stiftbohrung 23 am Ventilkörperteil 3 fluchtend angeordnet sind, so dass der Stift 24 als Verdrehsicherung entsprechend eingesetzt ist. Das Ventilkörperteil 3 liegt dabei im montierten Zustand am Mittelbolzenbund 13 an. An der axial gegenüberliegenden Seite des Mittelbolzenbundes 13 ist der Druckgasbehälter 35, der hier nur teilweise schematisch eingezeichnet ist, angeordnet, wobei der Gasbehälter-Anschlussstutzen 7 mit dem Behälteranschlussgewinde 8 in den Druckgasbehälter 35 dicht einragt. Der Mittelbolzen 4 ist mit der Spannverschraubung am Ventilkörperteil 3 axial gehalten, wobei dafür die Schraube 16 durch eine Haltescheibe 41 hindurch in das Sackloch 15 des Mittelbolzens 4 eingeschraubt ist. Die Haltescheibe 41 überdeckt für eine funktionssichere Abstützung gegenüber dem Ventilkörperteil 3 die Mittelbolzen-Aufnahmebohrung 19.

Mit Pfeilen 42 ist in Fig. 3 und 4 der Gasstrom entsprechend gekennzeichnet. Das Gas strömt aus dem Druckgasbehälter 35 kommend durch die Zentral-Gaszuführungsbohrung 9 des Mittelbolzens 4 bis zur Radial-Gaszuführungsbohrung 11 des Mittelbolzens 4. Von der Radial-Gaszuführungsbohrung 11 strömt das Gas weiter durch die Gaszuführungsnut 12 in die Anschlussstutzen, die als Spindeltrieb-Aufnahmestutzen 18 ausgebildet sind und entsprechend mit einem Ventilsitzteil 5 ausgestattet sind. Bei geschlossenem Spindeltrieb 33 wird der Gasstrom hier gestoppt. Wird der Spindeltrieb 33 geöffnet, so strömt das Gas weiter in den Ventilsitz-Gasraum 21 und durch die Auslass-Gasführungsleitung 22 in den Bodenbereich 21 a des zugeordneten Auslass-Anschlussstutzens 17. An diesen ist ein entsprechender Lungenautomat (nicht mit dargestellt) dicht angeschlossen, so dass das Gas entsprechend in diesen weiterströmt.

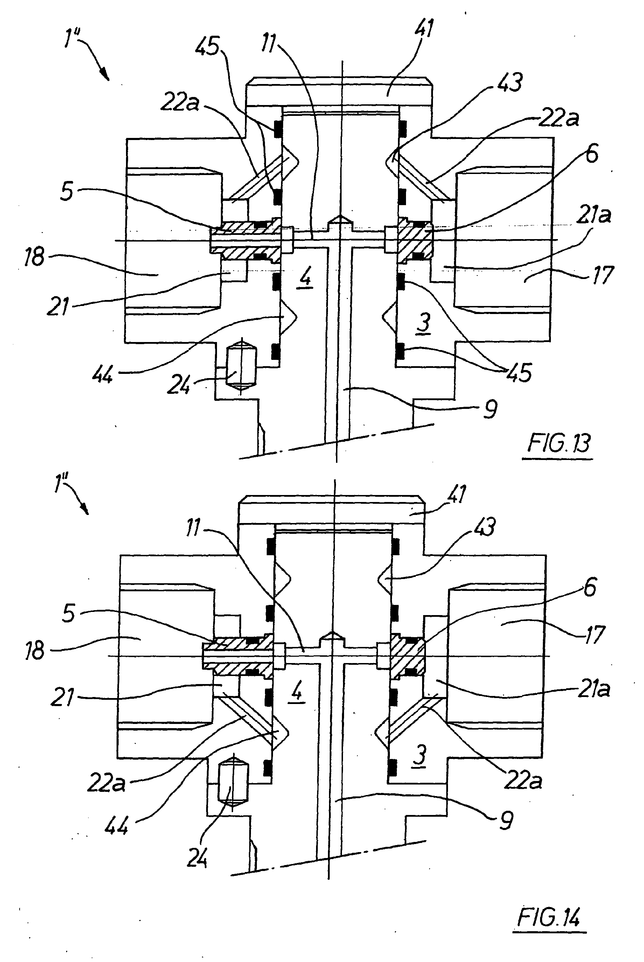

Bei dem bisher beschriebenen Ausführungsformen des Absperrventils 1 und 1' ist die Auslass-Gasführungsleitung 22 vom Ventilsitz-Gasraum 21 zum Bodenbereich 21 a des Auslass-Anschlussstutzens 17 als gerade und direkt verlaufende Auslass-Gasführungsbohrung im Ventilkörperteil 3 ausgeführt. In einer in den Fig. 13 und 14 dargestellten dritten Ausführungsform eines Absperrventils 1" ist die Auslass-Gasführungsleitung 22a vom Ventilsitz-Gasraum 21 kommend in eine am Mittelbolzen 4 umlaufende Gasauslassführungsnut 43 geführt. Von dort geht die Auslass-Gasführungsleitung 22a weiter am Umfang des Mittelbolzens 4 versetzt zum Bodenbereich 21 a des zugeordneten Auslass-Anschlussstutzens 17. Das Absperrventil 1" ist in Fig. 13 in einer schematischen Schnittdarstellung in Axialrichtung des Mittelbolzens 4 dargestellt, wobei in Fig. 14 eine Schnittdarstellung durch das Absperrventil 1" gezeigt ist, die gegenüber Fig. 13 um 90° um die Längsachse des Mittelbolzens 4 gedreht ist. Wie aus der Anordnung der Ventilsitzteile 5 und der Blindstopfen 6 zu erkennen ist, ist einerseits das Ventilkörperteil 3 mit vier Ventilsitzteil-Aufnahmebohrungen 20 ausgeführt und andererseits das Absperrventil 1" als Eckventilanordnung aufgebaut. Bauteile mit gleichen Funktionen wie beim Absperrventil 1 bzw. 1' sind mit gleichen Bezugszeichen versehen. Bei der dargestellten Ausführung als Doppelanschlussventil ist axial versetzt zur Gasauslassführungsnut 43 eine zweite Gasauslassführungsnut 44 vorgesehen, die entsprechend den zweiten Auslass-Anschlussstutzen 17 und den zweiten entsprechend zugeordneten Spindeltrieb-Aufnahmestutzen 18 (siehe Fig. 14) strömungstechnisch verbindet. Für eine Erhöhung der Verdrehsicherheit zwischen dem Ventilkörperteil 3 und dem Mittelbolzen 4 sind hier zwei Stifte 24 mit entsprechenden Stiftbohrungen 14 und 23 vorgesehen.

In allen beschriebenen Ausführungsformen des Absperrventils 1, 1' und 1" sind die Bauteile so ausgeführt, dass im montierten Zustand eine entsprechende dichte Passgenauigkeit gegeben ist. Insbesondere zwischen Mittelbolzen 4 und Ventilkörperteil 3 bzw. zwischen Ventilsitzteil 5 oder Blindstopfen 6 und Ventilsitzteil-Aufnahmebohrung 20 sind entsprechende Dichtelemente vorgesehen. Auch der Spindeltrieb 33 ist einerseits gegenüber dem Spindeltrieb-Aufnahmestutzen 18 und andererseits zwischen Oberspindel 39 und Verschraubungsteil 38 entsprechend abgedichtet. Alle in den Figuren eingezeichneten Dichtelemente mit Ausnahme der Sitzdichtung 34 des Spindeltriebes 33 sind mit dem Bezugszeichen 45 versehen.

Insgesamt kann mit dem erfindungsgemäßen Absperrventil 1, 1' oder 1" eine einfache und kostengünstige Anpassung an unterschiedliche Gegebenheiten erfolgen. Durch den Aufbau des Absperrventils 1, 1' oder 1" nach dem Baukastenprinzip mit den Bauteilen Ventilkörperteil 3, Mittelbolzen 4, Ventilsitzteil 5 und Blindstopfen 6 ist eine große Variabilität möglich. Somit kann einfach für unterschiedliche auf dem Markt befindliche Druckgasbehälter 35 der Mittelbolzen 4 bzw. der Gasbehälter-Anschlussstutzen 7 des Mittelbolzens 4 in entsprechend unterschiedlichen Ausführungsformen vorgesehen sein. Die Anschlussstutzen des Ventilkörperteils 3 können auch in unterschiedlichen Ausführungsarten entsprechend den auf dem Markt befindlichen Lungenautomaten ausgeführt sein. Durch die einfache Variationsmöglichkeit der Ventilsitzteile 5 bzw. der Blindstopfen 6 kann beispielsweise je nach Kundenwunsch eine Parallel-Ventilanordnung oder eine Eckventilanordnung ausgeführt werden. Diese Auflistung von möglichen Variationen des Absperrventils 1, 1' und 1" ist hier nur beispielhaft, da die Gesamtzahl der theoretisch möglichen Variationen bei weitem höher ist.

## Patentansprüche

1. Absperrventil für einen ortsbeweglichen Druckgasbehälter, insbesondere für eine Pressluftflasche für den Taucheinsatz
mit einem Ventilkörper mit wenigstens drei Anschlussstutzen,
wobei ein zentraler Anschlussstutzen als Gasbehälter-Anschlussstutzen ein Behälteranschlussgewinde aufweist,
die wenigstens zwei weiteren Anschlussstutzen axial versetzt dazu als Auslass-Anschlussstutzen und als Spindeltrieb-Aufnahmestutzen in einer Querebene radial zur Achse des Gasbehälter-Anschlussstutzens liegen,
wenigstens eine Zentral-Gaszuführungsbohrung ausgehend vom Gasbehälter-Anschlussstutzen in den Querebenenbereich und anschließend eine Radial-Gaszuführungsbohrung zum Bodenbereich des Spindeltrieb-Aufnahmestutzens angebracht ist, wo im Bodenbereich ein Ventilsitz mit einem diesen umgebenden Ventilsitz-Gasraum ausgebildet ist,
mit einem im Spindeltrieb-Aufnahmestutzen dicht aufgenommenen und durch Verschraubung gehaltenen, handbetätigbaren Spindeltrieb mit einer gegen den Ventilsitz verstellbaren Sitzdichtung und
mit einer vom Ventilsitz-Gasraum zum Bodenbereich des Auslass-Anschlussstutzens führenden Auslass-Gasführungsleitung,
**dadurch gekennzeichnet,**
**dass** der Ventilkörper (2) mehrteilig ausgebildet ist bestehend
aus einem Ventilkörperteil (3) mit dem Auslass-Anschlussstutzen (17) und dem Spindeltrieb-Aufnahmestutzen (18) und mit einer zentralen Mittelbolzen-Aufnahmebohrung (19) und einer radialen Ventilsitzteil-Aufnahmebohrung (20) zum Boden des Spindeltrieb-Aufnahmestutzens (18),
aus einem länglichen Ventilsitzteil (5) mit einer Gaszuführungsbohrung (29), an dem an einem Ende der Ventilsitz (30) und am anderen Ende ein Abstützbund (26) angebracht sind und das Ventilsitzteil (5) ausgehend von der Mittelbolzen-Aufnahmebohrung (19) in die radiale Ventilsitzteil-Aufnahmebohrung (20) dicht eingesteckt und über den Abstützbund (26) in Richtung nach radial außen abgestützt und festgelegt ist, und
aus einem Mittelbolzen (4), der dicht in die zentrale Mittelbolzen-Aufnahmebohrung (19) eingesteckt ist, mit der Zentral-Gaszuführungsbohrung (9), an dem an einem Ende der vom Ventilkörperteil (3) abstehende Gasbehälter-Anschlussstutzen (7) mit dem Behälteranschlussgewinde (8) ausgebildet ist und der daran anschließend einen Mittelbolzenbund (13) aufweist, wobei
dieser einerseits zur Abstützung am Ventilkörperteil (3) und andererseits zur Abstützung am Gasbehälteranschlussrand (35) dient,
am anderen Ende des Mittelbolzens (4) eine Spannverschraubung zur axialen Halterung des Mittelbolzens (4) in der Mittelbolzen-Aufnahmebohrung (19) angebracht ist,
im Mittelbolzen (4) ein Teil der Radial-Gaszuführungsbohrung (11) zum Ventilsitzteil (5) hin angebracht ist.

2. Absperrventil nach Anspruch 1, **dadurch gekennzeichnet, dass** das Absperrventil (1; 1'; 1 ") ein Doppelanschlussventil ist mit zwei Auslass-Anschlussstutzen (17) und zwei jeweils zugeordneten Spindeltrieb-Aufnahmestutzen(18) mit je einem Ventilsitzteil (5) und einem einzigen zentralen Mittelbolzen (4).

3. Absperrventil nach Anspruch 2, **dadurch gekennzeichnet, dass** durch den Mittelbolzen (4) wenigstens eine Radial-Gaszuführungsbohrung (11) in eine daran umlaufende Gaszuführungsnut (12) führt, an die sich die Gaszuführungsbohrung (29) der zwei gegeneinander versetzten Ventilsitzteile (5) anschließen.

4. Absperrventil nach Anspruch 2 oder Anspruch 3, **dadurch gekennzeichnet, dass** die Auslass-Anschlussstutzen (17) und die zugeordneten Spindeltrieb-Aufnahmestutzen (19) um 90° versetzt angeordnet sind, so dass sich eine kreuzförmige Stutzenanordnung ergibt.

5. Absperrventil nach Anspruch 4, **dadurch gekennzeichnet, dass** im Ventilkörperteil (3) zwischen der Mittelbolzen-Aufnahmebohrung (19) und wenigstens drei Anschlussstutzenböden entsprechend drei Ventilsitzteil-Aufnahmebohrungen (20) angebracht sind, in die jeweils zur Ausbildung eines Auslass-Anschlussstutzens (17) ein Blindstopfen (6) und zur Ausbildung eines zugeordneten Spindeltrieb-Aufnahmestutzens (18) ein Ventilsitzteil (5) dicht einsteckbar sind.

6. Absperrventil nach einem der Anspruch 1 bis 5, **dadurch gekennzeichnet, dass** zumindest ein Auslass-Anschlussstutzen (17) und ein zugeordneter Spindeltrieb-Aufnahmestutzen (18) ein gleiches Innengewinde aufweisen.

7. Absperrventil nach einem der Ansprüche 1 bis 6, **dadurch gekennzeichnet, dass** an den Anlageflächen vom Ventilkörperteil (3) und Mittelbolzenbund (13) zugeordnete fluchtende Stiftbohrungen (14, 23) mit einem eingesetzten Stift (24) als Verdrehsicherung angebracht sind.

8. Absperrventil nach einem der Ansprüche 1 bis 7, **dadurch gekennzeichnet, dass** der Abstützbund (26) des Ventilsitzteils (5) und ggf. ein Abstützbund (27) eines Blindstopfens (6) unrund vorzugsweise quadratisch ausgebildet ist und verdrehsicher in einer Nut (25) in der Wand der Mittelbolzen-Aufnahmebohrung (19) gehalten ist.

9. Absperrventil nach einem der Ansprüche 1 bis 8, **dadurch gekennzeichnet, dass** die Spannverschraubung für den Mittelbolzen (4) durch eine die Mittelbolzen-Aufnahmebohrung (19) überdeckende Haltescheibe (41) und eine zentrale, die Haltescheibe (41) mit der Stirnseite des Mittelbolzens (4) verbindende Schraube (16) gebildet ist.

10. Absperrventil nach einem der Ansprüche 1 bis 9, **dadurch gekennzeichnet, dass** die Auslass-Gasführungsleitung (22) von einem Ventilsitz-Gasraum (21) zum Bodenbereich (21 a) eines Auslass-Anschlussstutzens (17) als gerade, direkte Auslass-Gasführungsbohrung im Ventilkörperteil (3) verläuft.

11. Absperrventil nach einem der Ansprüche 1 bis 9, **dadurch gekennzeichnet, dass** die Auslass-Gasführungsleitung (22a) vom Ventilsitz-Gasraum (21) in eine umlaufende Gasauslassführungsnut (43) des Mittelbolzens (4) verläuft und von dort am Umfang der Gasauslassführungsnut (43) versetzt zum Bodenbereich (21 a) des zugeordneten Auslassstutzens (17), wobei im Falle eines Doppelanschlussventils entsprechend zwei axial gegeneinander versetzte Gasauslassführungsnuten (43; 44) vorgesehen sind.

12. Absperrventil nach einem der Ansprüche 1 bis 11, **dadurch gekennzeichnet, dass** der Spindeltrieb (33) in einem in den Spindeltrieb-Aufnahmestutzen (18) einschraubbaren Verschraubungsteil (38) eine verdrehbare, aus dem Verschraubungsteil (38) herausragende Oberspindel (39) und eine damit gekoppelte gegen den Ventilsitz (30) verstellbare Unterspindel (40) mit der Sitzdichtung (34) aufweist.
